(19) **Europäisches Patentamt**
**European Patent Office**
**Office européen des brevets**

(11) **EP 4 031 313 B1**

(12) **EUROPÄISCHE PATENTSCHRIFT**

(45) Veröffentlichungstag und Bekanntmachung des Hinweises auf die Patenterteilung:
**04.06.2025 Patentblatt 2025/23**

(21) Anmeldenummer: **20764428.7**

(22) Anmeldetag: **04.09.2020**

(51) Internationale Patentklassifikation (IPC):
**B23F 1/02** *(2006.01)* **B23F 5/04** *(2006.01)*
**B23F 9/02** *(2006.01)* **B23F 15/00** *(2006.01)*
**B23F 19/00** *(2006.01)* **B23F 23/00** *(2006.01)*

(52) Gemeinsame Patentklassifikation (CPC):
**B23F 1/023; B23F 5/04; B23F 9/02; B23F 15/00; B23F 19/002; B23F 23/006**

(86) Internationale Anmeldenummer:
**PCT/EP2020/074836**

(87) Internationale Veröffentlichungsnummer:
**WO 2021/052787 (25.03.2021 Gazette 2021/12)**

(54) **WERKZEUGMASCHINE ZUR BEARBEITUNG VON VERZAHNUNGEN, VERFAHREN ZUR BEARBEITUNG VON ZAHNFLANKEN EINES WERKSTÜCKS, UND VERFAHREN ZUM ABRICHTEN EINES WERKZEUGS ZUR BEARBEITUNG VON VERZAHNUNGEN MIT EINER DERARTIGEN MASCHINE**

MACHINE TOOL FOR MACHINING TEETH, METHOD FOR MACHINING TOOTH FLANKS OF A WORKPIECE, AND METHOD FOR DRESSING A TOOL FOR MACHINING TEETH USING A MACHINE TOOL OF THIS TYPE

MACHINE-OUTIL POUR USINER DES DENTS, PROCÉDÉ D'USINAGE DE FLANCS DE DENTS D'UNE PIÈCE À USINER ET PROCÉDÉ DE DRESSAGE D'UN OUTIL D'USINAGE DE DENTS À L'AIDE D'UNE TELLE MACHINE-OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2019 CH 11692019**

(43) Veröffentlichungstag der Anmeldung:
**27.07.2022 Patentblatt 2022/30**

(73) Patentinhaber: **Reishauer AG**
**8304 Wallisellen (CH)**

(72) Erfinder: **MÜLLER, Michel**
**8610 Uster (CH)**

(74) Vertreter: **Detken, Andreas**
**Isler & Pedrazzini AG**
**Giesshübelstrasse 45**
**Postfach 1772**
**8027 Zürich (CH)**

(56) Entgegenhaltungen:
EP-B1- 1 146 983    CH-A1- 713 798
DE-A1- 102012 016 515    DE-A1- 102018 001 103
US-A- 3 487 585    US-A1- 2016 176 010

**Beschreibung**

TECHNISCHES GEBIET

Die vorliegende Erfindung betrifft eine Werkzeugmaschine gemäß dem Oberbegriff des Anspruchs 1 zur Bearbeitung von Verzahnungen, Verfahren zu ihrem Betrieb, sowie ein Computerprogramm zur Ausführung der Verfahren.

STAND DER TECHNIK

In der Verzahnungstechnik werden häufig Gerad- oder Schrägverzahnungen hergestellt, deren Flankenlinien breitenballig modifiziert sind. Die Grösse der Modifikationen liegt häufig nur im Bereich unterhalb von einigen zehn Mikrometern. Derartig modifizierte Verzahnungen haben besondere Vorteile hinsichtlich des Lastverhaltens und der Geräuschentwicklung.

Für die Fertigung breitenballig modifizierter Verzahnungen wurde im Stand der Technik ein Verfahren vorgeschlagen, bei dem der Achsabstand zwischen Werkstück und Werkzeug entlang einer radialen Zustellrichtung während eines Bearbeitungshubs kontinuierlich verändert wird. Dazu wurde im Stand der Technik vorgeschlagen, im Verlauf des Bearbeitungshubs eine Bewegung entlang der radialen Zustellrichtung auszuführen, die zunächst den Achsabstand vergrössert, in der Mitte der Verzahnung zum Stillstand kommt und anschliessend den Achsabstand wieder verkleinert, während das Werkzeug kontinuierlich parallel zur Werkstückachse vorgeschoben wird.

Dieses Verfahren ist insofern problematisch, dass im Verlaufe des Bearbeitungshubs eine Richtungsumkehr der radialen Zustellbewegung stattfindet. An der radialen Zustellbewegung ist eine Vielzahl von Komponenten beteiligt, zwischen denen elastische Kräfte und Reibungskräfte auftreten. Bei der Richtungsumkehr findet insbesondere an den beteiligten Dichtungen ein Übergang von Gleitreibung zu Haftreibung statt. Dies führt dazu, dass nach der Richtungsumkehr zunächst die Haftreibung überwunden werden muss, bevor wieder die Gleitreibung einsetzt. Dadurch kann die radiale Zustellbewegung am Umkehrpunkt den Sollvorgaben nicht vollständig folgen und kommt für einen gewissen Zeitraum vollständig zum Stillstand, bis die wirkenden Kräfte die Haftreibungskraft wieder überwinden. Dieser Effekt kann zu unerwünschten Abweichungen der Flankenform von den Vorgaben führen.

Insbesondere bei Schlichtvorgängen, bei denen nur ein sehr kleines Aufmass entfernt wird, sind zudem die Bearbeitungskräfte unter Umständen verhältnismässig klein. Das kann dazu führen, dass es bei der Richtungsumkehr entlang der radialen Zustellrichtung zu einem Lastwechsel kommt, der zu einem zusätzlichen unerwünschten Umkehreffekt aufgrund der endlichen Steifigkeit der beteiligten Komponenten führt.

Zudem können bei sehr langsamen radialen Zustellbewegungen auch unabhängig von der Richtungsumkehr Reibungseffekte auftreten, die zusammen mit elastischen Kräften zu reibungsinduzierten Schwingungen führen können. Derartige Effekte ergeben sich auch bei der Fertigung von anderen Modifikationen als breitenballigen Modifikationen, z.B. von konischen Modifikationen.

Diesen Effekten kann durch verschiedene Massnahmen entgegengewirkt werden. Insbesondere können zur Minderung der Reibungseffekte besonders reibungsarme Führungs- und Antriebskomponenten verwendet werden. Zur Verminderung der Umkehreffekte kann die Steifigkeit der Führungs- und Antriebskomponenten erhöht bzw. zusammen mit der Dämpfung optimiert werden. Schliesslich kann diesen Effekten auch regelungstechnisch entgegengewirkt werden. Alle diese Massnahmen führen allerdings lediglich zu einer Abschwächung der genannten Probleme, können die Probleme jedoch nicht vollständig beheben.

DE 10 2012 016515 A1 offenbart eine Werkzeugmaschine gemäß dem Oberbegriff des Anspruchs 1, nämlich eine Wälzstossmaschine, deren Stosskopfschlitten an einem Maschinenständer in einer Schrägstellung angebracht ist. Auf diese Weise wird durch eine Verschiebung in vertikaler Richtung eine gleichzeitige Verschiebung des Stosswerkzeugs in horizontaler Richtung erreicht, um das Stosswerkzeug beim Rückhub vom Werkstück abzuheben. Die Erzeugung von Modifikationen wird nicht angesprochen.

US 2016/176010 A1 offenbart eine Wälzschleifmaschine mit zwei Werkstückspindeln und einer Werkzeugspindel. Die Werkzeugspindel ist entlang einer Linearführung, die sich parallel zu einer horizontalen Schrägachse erstreckt, verschiebbar gelagert. Die Werkstückspindeln stehen im selben lotrechten Horizontalabstand von der horizontalen Schrägachse. Die Werkzeugrotationsachse bildet in einer Horizontalprojektion einen spitzen Winkel zur horizontalen Schrägachse. Dadurch werden Kollisionen zwischen der Werkzeugspindel und den Werkstücken vermieden. Die Erzeugung von Modifikationen wird auch hier nicht angesprochen.

DARSTELLUNG DER ERFINDUNG

Es ist eine Aufgabe der vorliegenden Erfindung, eine Verzahnungsmaschine anzugeben, die die Herstellung von modifizierten Zahnflanken mit höherer Präzision ermöglicht.

Diese Aufgabe wird durch eine Werkzeugmaschine zur Bearbeitung von Verzahnungen nach Anspruch 1 gelöst. Weitere Ausführungsformen sind in den abhängigen Ansprüchen angegeben.

Es wird eine Werkzeugmaschine zur Bearbeitung von Verzahnungen vorgeschlagen. Diese weist auf:

eine Werkstückspindel, um ein Werkstück zu einer Drehung um eine Werkstückachse anzutreiben;
eine Werkzeugspindel, um ein Werkzeug (Bearbeitungswerkzeug) zu einer Drehung um eine Werkzeugachse anzutreiben, und

einen Axialschlitten, mit dem eine relative axiale Vorschubposition zwischen der Werkzeugspindel und der Werkstückspindel bezüglich der Werkstückachse veränderlich ist.

Erfindungsgemäss ist der Axialschlitten entlang einer Axialführungsrichtung geführt, die gegenüber der Werkstückachse um einen Neigungswinkel geneigt ist. Der Neigungswinkel nimmt betragsmässig einen Wert zwischen 0.1° und 30°, vorzugsweise zwischen 0.1° und 15°, besonders bevorzugt zwischen 0.1° und 3° an. In einigen Ausführungsformen nimmt der Neigungswinkel betragsmässig einen Wert zwischen 0.5° und 30°, zwischen 0.5° und 15°, oder zwischen 0.5° und 3° an.

Der Axialschlitten trägt entweder die Werkstückspindel oder die Werkzeugspindel. Aufgrund der geneigten Führung des Axialschlittens verändert sich der radiale Abstand zwischen der Werkzeugachse und der Werkstückachse bei einer Bewegung des Axialschlittens entlang der Axialführungsrichtung. Dadurch wird es möglich, Verzahnungen mit Flankenlinienmodifikationen zu fertigen, ohne dass während der Bearbeitung der Verzahnung eine Richtungsumkehr der radialen Zustellbewegung erforderlich ist. Die genannten Probleme, die sich bei einer Richtungsumkehr ergeben, werden dadurch vermieden. Zudem wird es möglich, auch kleinste Flankenlinienmodifikationen zu fertigen, ohne dass es zu störenden Reibungseffekten kommt.

Des Weiteren weist die Werkzeugmaschine einen Zustellschlitten auf, mit dem der Achsabstand zwischen der Werkzeugachse und der Werkstückachse entlang einer Zustellrichtung zusätzlich verändert werden kann. Diese Zustellung kann unabhängig von der Bewegung entlang der Axialführungsrichtung erfolgen. Sie ist der Änderung des Achsabstands aufgrund der geneigten Führung des Axialschlittens überlagert. Während der Bearbeitung der Zahnflanken erfolgen dementsprechend simultane Bewegungen des Axialschlittens und des Zustellschlittens.

Die Zustellrichtung kann, muss aber nicht senkrecht zur Werkstückachse verlaufen. Sie wird im Folgenden als "radiale Zustellrichtung" bezeichnet, auch wenn diese Richtung nicht notwendigerweise exakt radial zur Werkstückachse, also nicht notwendigerweise exakt senkrecht zur Werkstückachse, verläuft. Beispielsweise kann die radiale Zustellrichtung einen Winkel mit der Werkstückachse im Bereich von 60° bis 120° bilden.

Die Axialführungsrichtung verläuft vorzugsweise in einer gemeinsamen Ebene mit der Werkstückachse und der radialen Zustellrichtung. Der Neigungswinkel kann in dieser Ebene positiv oder negativ sein, d.h. die Axialführungsrichtung kann (vom Maschinenbett aus gesehen) von der Werkstückachse weg oder zu dieser hin geneigt sein.

Vorzugsweise ist die Werkzeugspindel direkt oder indirekt (d.h. über weitere Schlitten und/oder Schwenkkörper) auf dem Axialschlitten angeordnet, das heisst die Werkzeugspindel führt Bewegungen entlang der geneigten axialen Führungsrichtung gegenüber einem Maschinenbett der Werkzeugmaschine aus. Der Axialschlitten bildet in diesem Fall einen Werkzeugträger. Es ist aber auch denkbar, dass auf dem Axialschlitten direkt oder indirekt die Werkstückspindel montiert ist, dass also die Werkstückspindel Bewegungen entlang der geneigten axialen Führungsrichtung gegenüber dem Maschinenbett ausführt.

Insbesondere kann die folgende Achsanordnung vorliegen: Der Zustellschlitten kann entlang der radialen Zustellrichtung verschiebbar auf dem Maschinenbett geführt sein und einen Werkzeugträger bilden, und der Axialschlitten kann dann auf dem Zustellschlitten entlang der Axialführungsrichtung geführt angeordnet sein.

In vorteilhaften Ausführungsformen ist die Werkzeugspindel um eine Schwenkachse gegenüber dem Axialschlitten verschwenkbar. Dazu kann die Werkzeugmaschine einen Schwenkkörper aufweisen. Der Schwenkkörper kann insbesondere auf dem Axialschlitten angeordnet sein. Wenn das Werkzeug ein Schleifwerkzeug ist, wird der Schwenkkörper auch als Schleifkopf bezeichnet. Die Schwenkachse verläuft vorzugsweise parallel zur radialen Zustellrichtung bzw. senkrecht zur Werkstückachse. Sie kann aber auch in einem Winkel zur radialen Zustellrichtung verlaufen, der von 0° abweicht, wobei dieser Winkel vorzugsweise betragsmässig zwischen 0° und 30° liegt. Auch kann die Schwenkachse in einem Winkel zur Werkstückachse verlaufen, der von 90° abweicht, wobei dieser Winkel vorzugsweise im Bereich von 60° bis 120° liegt. Insbesondere kann die Schwenkachse senkrecht zur Axialführungsrichtung verlaufen. Dabei ist es von Vorteil, wenn die Schwenkachse in einer Ebene liegt, die von der Werkstückachse und der Axialführungsrichtung aufgespannt wird.

In einer Ausgestaltung, die insbesondere für das kontinuierliche Wälzschleifen geeignet ist, ist die Werkzeugspindel entlang einer Shiftrichtung, die parallel zur Werkzeugachse verläuft, gegenüber dem Axialschlitten verschiebbar. Dazu kann die Werkzeugmaschine einen Shiftschlitten aufweisen. Der Shiftschlitten kann insbesondere derart auf dem Schwenkkörper angebracht sein, dass er relativ zum Schwenkkörper entlang der Shiftrichtung verschiebbar ist. Die Shiftrichtung verläuft vorzugsweise senkrecht zur Schwenkachse, um die die Werkzeugspindel verschwenkbar ist. In einigen Ausführungsformen verläuft sie zudem senkrecht zur radialen Zustellrichtung.

Die vorliegende Erfindung stellt ausserdem ein Verfahren zur Bearbeitung von Zahnflanken eines Werkstücks mit einer Werkzeugmaschine der vorstehend angegebenen Art zur Verfügung. Das Verfahren weist auf:

Ausführen eines Bearbeitungshubs, indem eine Bewegung zwischen der Werkzeugspindel und der Werkstückspindel entlang der geneigten Axialführungsrichtung ausgeführt wird, während sich ein auf der Werkzeugspindel aufgespanntes Werkzeug in einem Bearbeitungseingriff mit dem auf der Werkstückspindel aufgespannten Werkstück befindet; und

Ausführen einer Zustellbewegung zwischen der Werkzeugspindel und der Werkstückspindel entlang einer radialen Zustellrichtung simultan zum Bearbeitungshub,

wobei die Bewegung entlang der geneigten Axialführungsrichtung mit einer Axialführungsgeschwindigkeit erfolgt und die Bewegung entlang der radialen Zustellrichtung mit einer radialen Zustellgeschwindigkeit erfolgt.

Die Maschine weist eine Steuereinrichtung auf, die dazu ausgebildet ist, die Werkzeugmaschine so zu steuern, dass sie entsprechende simultane Bewegungen zwischen der Werkzeugspindel und der Werkstückspindel entlang der geneigten Axialführungsrichtung und der radialen Zustellrichtung ausführt.

Vorzugsweise ändert sich das Vorzeichen der Axialführungsgeschwindigkeit während eines Bearbeitungshubs nicht. Auch das Vorzeichen der radialen Zustellgeschwindigkeit ändert sich vorzugsweise während eines Bearbeitungshubs nicht. Anspruchsgemäss unterschreitet die radiale Zustellgeschwindigkeit während eines Bearbeitungshubs (und insofern während der Bearbeitung jeder einzelnen Zahnflanke) betragsmässig einen vorbestimmten Schwellwert nicht. Dadurch werden nachteilige Effekte bei der radialen Zustellbewegung vermieden. Im Ergebnis können Flankenlinienmodifikationen mit sehr viel grösserer Genauigkeit als im Stand der Technik gefertigt werden.

Besondere Vorteile ergeben sich, wenn die radiale Zustellgeschwindigkeit und die Axialführungsgeschwindigkeit in einem zeitlich veränderlichen Verhältnis stehen. Insbesondere können diese Geschwindigkeiten derart in einem veränderlichen Verhältnis stehen, dass die radiale Zustellgeschwindigkeit während eines Bearbeitungshubs (und insofern während der Bearbeitung einer Zahnflanke) ihr Vorzeichen nicht ändert, während eine resultierende Bewegung zwischen der Werkzeugspindel und der Werkstückspindel entlang der radialen Zustellrichtung eine Geschwindigkeit aufweist, die während der Bearbeitung der Zahnflanken (bzw. während eines Bearbeitungshubs) ihr Vorzeichen ändert. Dadurch können insbesondere breitenballig modifizierte Verzahnungen gefertigt werden, ohne dass die oben geschilderten Nachteile aus dem Stand der Technik auftreten.

Das Verfahren kann aufweisen:

Messen von Positionsgrössen entlang der radialen Zustellrichtung und der geneigten Axialführungsrichtung; und
Transformieren der gemessenen Positionsgrössen in transformierte Positionsgrössen entlang der radialen Zustellrichtung und einer parallel zur Werkstückachse verlaufenden axialen Vorschubrichtung.

Das Verfahren kann auch aufweisen:

Erzeugen von Steuerbefehlen für eine Bewegung der Werkzeugspindel relativ zur Werkstückspindel entlang einer parallel zur Werkstückachse verlaufenden axialen Vorschubrichtung; und
Transformieren der erzeugten Steuerbefehle in transformierte Steuerbefehle für eine simultane Bewegung der Werkzeugspindel entlang der geneigten Axialführungsrichtung und der radialen Zustellrichtung.

Durch diese Massnahmen wird es möglich, die Maschine mit einer Steuereinrichtung zu steuern, die für Maschinen ausgelegt ist, deren Axialführungsrichtung parallel zur Werkstückachsenrichtung verläuft.

Die Steuereinrichtung der Werkzeugmaschine kann entsprechend mindestens eine der folgenden Transformationseinrichtungen umfassen:

eine erste Transformationseinrichtung, um Positionsgrössen, die entlang der radialen Zustellrichtung und der geneigten Axialführungsrichtung gemessen wurden, in transformierte Positionsgrössen entlang der radialen Zustellrichtung und einer parallel zur Werkstückachse verlaufenden axialen Vorschubrichtung zu transformieren; und
eine zweite Transformationseinrichtung, um Steuerbefehle für eine Bewegung der Werkzeugspindel relativ zur Werkstückspindel entlang einer parallel zur Werkstückachse verlaufenden axialen Vorschubrichtung in transformierte Steuerbefehle für eine simultane Bewegung der Werkzeugspindel entlang der geneigten Axialführungsrichtung und der radialen Zustellrichtung zu transformieren.

Die Werkzeugmaschine kann insbesondere für eines der folgenden Verfahren ausgebildet sein: kontinuierliches Wälzschleifen, Teilwälzschleifen, diskontinuierliches oder kontinuierliches Profilschleifen, Verzahnungshonen, Wälzfräsen oder Wälzschälen. Zu diesem Zweck kann insbesondere auf der Werkzeugspindel ein entsprechendes Werkzeug aufgespannt sein. Die Steuereinrichtung kann dazu ausgebildet sein, die Werkzeugmaschine so zu steuern, dass sie die jeweils verfahrenstypischen Bewegungen der Werkzeugspindel und der Werkstückspindel ausführt.

Die Werkzeugmaschine kann eine Abrichteinrichtung mit einem Abrichtwerkzeug aufweisen. Die Steuereinrichtung kann dann dazu ausgebildet sein, das Werkzeug, insbesondere eine Schleifschnecke, mit dem Abrichtwerkzeug unter Erzeugung von Bewegungen entlang der geneigten Axialführungsrichtung abzurichten. Beim Abrichten werden somit Relativbewegungen zwischen dem Werkzeug und dem Abrichtwerkzeug entlang der geneigten Axialführungsrichtung erzeugt, während das Werkzeug mit dem Abrichtwerkzeug in Eingriff steht. Dadurch können beim Abrichten ähnliche Vorteile wie bei der Bearbeitung von Verzahnungen erreicht werden.

Insbesondere kann die Steuereinrichtung dazu ausgebildet sein, die Werkzeugspindel mit ihrer Schwenkachse gegenüber dem Axialschlitten derart auszurichten, dass die Werkzeugachse in oder parallel zu einer Ebene verläuft, die von der Axialführungsrichtung und der radialen Zustellrichtung aufgespannt wird. Diese Stellung der Werkzeugspindel wird im Folgenden als Abrichtstellung bezeichnet. Die angegebene Wahl der Abrichtstellung ist insbesondere dann von Vorteil, wenn das Werkzeug eine Schleifschnecke ist. Während des Abrichtvorgangs kann auf diese Weise die Schleifschnecke ohne Weiteres entlang ihrer Längsachse, d.h. entlang der Werkzeugachse, entlang der geneigten Axialführungsrichtung relativ zum Abrichtwerkzeug bewegt werden, um die Schleifschnecke über ihre gesamte Breite abrichten zu können. Hierzu kann der Axialschlitten eingesetzt werden. Falls die Werkzeugspindel auf einem Shiftschlitten angebracht ist, kann je nach Ausführungsform alternativ oder zusätzlich auch der Shiftschlitten eingesetzt werden.

Die Abrichteinrichtung kann eine Abrichtspindel aufweisen, die dazu ausgebildet ist, das Abrichtwerkzeug zu einer Drehung um eine Abrichtspindelachse anzutreiben. Die Abrichtspindel ist vorzugsweise um mindestens eine Schwenkachse schwenkbar, um das Abrichtwerkzeug in Eingriff mit dem Bearbeitungswerkzeug zu bringen, wenn sich die Werkzeugspindel in der vorstehend angegeben Abrichtstellung befindet. Dazu kann die Abrichteinrichtung einen entsprechenden Schwenkkörper aufweisen. Die Schwenkachse der Abrichtspindel verläuft vorzugsweise quer zur Axialvorschubrichtung, insbesondere in einem Winkel von 60° bis 120° zur Axialvorschubrichtung, und quer zur Werkstückachse, vorzugsweise in einem Winkel von 60° bis 120° zur Werkstückachse, insbesondere senkrecht zu dieser. Wenn die Werkstückachse vertikal im Raum verläuft, verläuft die Schwenkachse der Abrichtspindel vorzugsweise horizontal.

Die Abrichteinrichtung kann gemeinsam mit der mindestens einen Werkstückspindel auf einem bewegbaren Werkzeugträger angebracht sein, oder sie kann relativ zum Maschinenbett stationär angeordnet sein.

Die vorliegende Erfindung stellt des Weiteren ein Computerprogramm zur Verfügung. Das Computerprogramm umfasst Befehle, welche bewirken, dass eine Steuereinrichtung in einer Werkzeugmaschine der vorstehend erläuterten Art, insbesondere einer oder mehrere Prozessoren der Steuereinrichtung, das vorstehend erläuterte Verfahren ausführt. Das Computerprogramm kann in einer geeigneten Speichereinrichtung gespeichert sein.

Des Weiteren stellt die Erfindung ein computerlesbares Medium bereit, auf dem das Computerprogramm gespeichert ist. Das Medium kann ein nichtflüchtiges Medium sein, beispielsweise ein Flash-Speicher, eine CD, eine Festplatte usw.

## KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

Fig. 1　　eine schematische perspektivische Ansicht einer Wälzschleifmaschine gemäss einer ersten Ausführungsform;

Fig. 2　　eine schematische Seitenansicht der Wälzschleifmaschine aus Fig. 1;

Fig. 3　　ein Diagramm zur Illustration einer Koordinatentransformation bei der Bearbeitung eines zylindrischen Stirnrads;

Fig. 4　　eine schematische Seitenansicht eines Stirnrads mit breitenballig modifizierter Verzahnung;

Fig. 5　　ein Diagramm zur Illustration einer Koordinatentransformation bei der Bearbeitung eines Stirnrads gemäss Fig. 4;

Fig. 6　　ein schematisches Blockdiagramm von Funktionseinheiten für die Steuerung der axialen Vorschubbewegung;

Fig. 7　　eine schematische Seitenansicht einer Wälzschleifmaschine gemäss einer zweiten Ausführungsform;

Fig. 8　　eine schematische Seitenansicht einer Wälzschleifmaschine gemäss einer dritten Ausführungsform; und

Fig. 9　　eine schematische Seitenansicht einer Wälzschleifmaschine gemäss einer vierten Ausführungsform.

## BESCHREIBUNG BEVORZUGTER AUSFÜHRUNGSFORMEN

### Beispielhafter Aufbau einer Wälzschleifmaschine

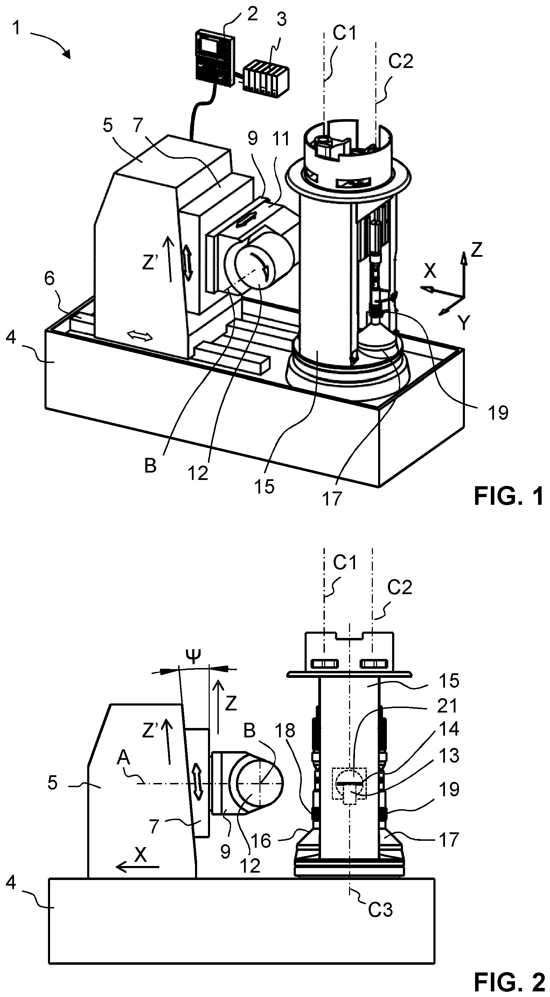

In den Figuren 1 und 2 ist als Beispiel für eine Werkzeugmaschine zur Bearbeitung von Verzahnungen beispielhaft eine Wälzschleifmaschine 1 gemäss einer ersten Ausführungsform dargestellt. Die Maschine weist ein Maschinenbett 4 auf, auf dem ein Werkzeugträger 5 entlang einer radialen Zustellrichtung X mittels Linearführungen 6 verschiebbar geführt ist. Der Werkzeugträger 5 trägt einen Axialschlitten 7, der entlang einer Axialführungsrichtung Z' gegenüber dem Werkzeugträger 5 verschiebbar geführt ist. Auf dem Axialschlitten 7 ist ein Schleifkopf 9 montiert, der zur Anpassung an den Schrägungswinkel der zu bearbeitenden Verzahnung um eine parallel zur X-Richtung verlaufende Schwenkachse A verschwenkbar ist. Der Schleifkopf 9 wiederum trägt einen Shiftschlitten, auf dem eine Werkzeugspindel 11 entlang einer Shiftrichtung Y verschiebbar ist. Die Shiftrichtung Y verläuft senkrecht zur Schwenkachse A und somit auch senkrecht zur X-Richtung, aber nicht notwendigerweise senkrecht zur Z'-Richtung. Auf der Werkzeugspindel 11 ist ein Feinbearbeitungswerkzeug in Form einer schneckenförmig profilierten Schleifscheibe (Schleifschnecke) 12 aufgespannt. Die Schleifschnecke 12 wird von der Werkzeugspindel 11 zu einer Drehung um eine Werkzeugachse B angetrieben. Die Werkzeugachse B verläuft parallel zur Y-Richtung.

Das Maschinenbett 4 trägt des Weiteren einen schwenkbaren Werkstückträger 15 in Form eines Drehturms, der um eine vertikale Achse C3 zwischen mindestens zwei Stellungen verschwenkbar ist. Auf dem Werkstückträger 15 sind einander diametral gegenüberliegend zwei identische Werkstückspindeln 16, 17 montiert. Die in der Fig. 2 links angeordnete Werkstückspindel 16 befindet sich in einer Bearbeitungsposition, in der ein auf ihr aufgespanntes Werkstück 18 mit der Schleifschnecke 12 bearbeitet werden kann. Dazu treibt diese Werkstückspindel das Werkstück 18 zu einer Drehung um eine vertikale erste Werkstückachse C1 an. Die andere, um 180° versetzt angeordnete Werkstückspindel 17 befindet sich in einer Werkstückwechselposition, in der ein fertig bearbeitetes Werkstück 19 von dieser Spindel entnommen und ein neues Rohteil aufgespannt werden kann. Die Achse der in dieser Stellung befindlichen Werkstückspindel wird als zweite Werkstückachse C2 bezeichnet.

Auf dem Drehturm ist ausserdem eine nur symbolisch angedeutete Abrichteinrichtung 13 mit einem Abrichtwerkzeug 14 montiert. Diese dient dazu, die Schleifschnecke 12 abzurichten.

Alle angetriebenen linearen und rotatorischen Achsen der Wälzschleifmaschine 1 werden durch eine Maschinensteuerung mit Bedientafel 2 und Achsmodulen 3 digital gesteuert. Die Achsmodule 3 stellen an ihren Ausgängen Steuersignale für jeweils eine Maschinenachse (d.h. für mindestens einen Aktor, der zum Antrieb der betreffenden Maschinenachse dient, wie z.B. einen Servomotor) bereit.

## Bearbeitung eines Werkstücks

Um ein noch unbearbeitetes, vorverzahntes Werkstück (Rohteil) 19 zu bearbeiten, wird das Werkstück 19 durch einen automatischen Werkstückwechsler auf derjenigen Werkstückspindel 17 aufgespannt, die sich in der Werkstückwechselposition befindet. Der Werkstückwechsel erfolgt zeitparallel zur Bearbeitung eines anderen Werkstücks 18 auf der anderen Werkstückspindel 16, die sich in der Bearbeitungsposition befindet. Wenn das neu zu bearbeitende Werkstück 19 aufgespannt ist und die Bearbeitung des anderen Werkstücks 18 abgeschlossen ist, wird der Werkstückträger 15 um 180° um die C3-Achse geschwenkt, so dass die Spindel mit dem neu zu bearbeitenden Werkstück in die Bearbeitungsposition gelangt. Vor und/oder während des Schwenkvorgangs wird mit Hilfe einer zeichnerisch nicht dargestellten, am Werkstückträger 15 angeordneten Einzentriersonde eine Einzentrieroperation durchgeführt. Dazu wird die Werkstückspindel 17 in Drehung versetzt, und die Lage der Zahnlücken des Werkstücks 19 wird mit Hilfe der Einzentriersonde vermessen. Auf dieser Basis wird der Wälzwinkel festgelegt.

Wenn die Werkstückspindel 17, die das zu bearbeitende Werkstück 19 trägt, die Bearbeitungsposition erreicht hat, wird das Werkstück 19 durch Verschiebung des Werkzeugträgers 5 entlang der X-Achse mit der Schleifschnecke 12 in Eingriff gebracht. Das Werkstück 19 wird nun durch die rotierende Schleifschnecke 12 im Wälzeingriff bearbeitet. Dabei führt die Maschine aufeinander abgestimmte Bewegungen entlang der Achsen X, Y und Z' aus. Die Bearbeitung kann in einem oder mehreren axialen Bearbeitungshüben erfolgen. Dabei führt die Maschine während jedes Bearbeitungshubs eine Bewegung entlang der Z'-Achse aus, deren Geschwindigkeit ihr Vorzeichen nicht ändert.

Zeitparallel zur Werkstückbearbeitung wird das fertig bearbeitete Werkstück 18 von der anderen Werkstückspindel 16 entnommen, und es wird ein weiteres Rohteil auf dieser Spindel aufgespannt.

## Achsrichtungen

Zusätzlich zu den schon genannten Richtungen X, Y und Z' wird eine weitere Richtung Z definiert. Diese verläuft definitionsgemäss parallel zur Werkstückachse C1, d.h. zu der Drehachse des Werkstücks, das sich in der Bearbeitungsposition befindet. Durch den Bearbeitungshubs entlang der Z'-Achse wird während der Bearbeitung des Werkstücks die Position des Werkzeugs relativ zum Werkstück laufend entlang der Z-Richtung verändert, um die Verzahnung über die gesamte Breite des Werkstücks hinweg zu bearbeiten. Dies bezeichnet man als axialen Vorschub, und die Z-Richtung wird daher auch als axiale Vorschubrichtung bezeichnet.

Im Stand der Technik stimmt die Axialführungsrichtung Z', d.h. die Richtung, entlang derer der Axialschlitten 7 verschiebbar geführt ist, üblicherweise mit der axialen Vorschubrichtung Z überein. In der vorliegenden Maschine weichen diese Richtungen dagegen voneinander ab. Konkret verläuft die Z'-Richtung innerhalb einer Ebene, die von der X-Richtung und der Z-Richtung aufgespannt wird, und ist gegenüber der Z-Richtung um einen Winkel $\psi$ geneigt. Dabei liegt $\psi$ betragsmässig zwischen 0,1° und 30°, insbesondere zwischen 0.1° und 30°, vorzugsweise zwischen 0.1° und 15°. Ein relativ kleiner Winkel kann schon genügen, z.B. zwischen 0.1° und 3°, insbesondere zwischen 0.5° und 3°.

Für die vorliegend vorgeschlagene Anordnung der Richtungen X, Y, Z, Z', A, B und C1 gilt also insgesamt:

- X ⊥ Y, X ⊥ Z, Y ∦ Z

- A ∥ X, B ∥ Y, C1 ∥ Z
- A ⊥ B, A ⊥ C1, B ∦ C1
- Z' ∦ Z, Z' ⊀ X, Z' liegt in X-Z- bzw. X-C1-Ebene

Dabei bedeutet das Symbol ∥ "ist parallel zu", das Symbol ∦ "ist nicht parallel zu", das Symbol ⊥ "ist senkrecht zu" und das Symbol ⊀ "steht in einem Winkel von ungleich 0° und ungleich 90°".

Koordinatentransformation

Die Maschinensteuerung berechnet normalerweise für eine gewünschte Flankenform der Verzahnung die entsprechenden Steuerbefehle im Koordinatensystem X, Y, Z. Bei der vorliegenden Maschine erfordert eine reine Vorschubbewegung entlang der Z-Richtung **simultane** Bewegungen entlang der X- und Z'-Richtungen. Um die vorliegende Maschine betreiben zu können, ohne sämtliche Maschinenprogramme neu schreiben zu müssen, ist die Maschinensteuerung vorteilhaft so ausgebildet, dass sie die üblichen Vorschubbefehle für Bewegungen entlang der Z-Richtung in transformierte Steuerbefehle für simultane Bewegungen entlang der X- und Z'-Richtungen transformiert.

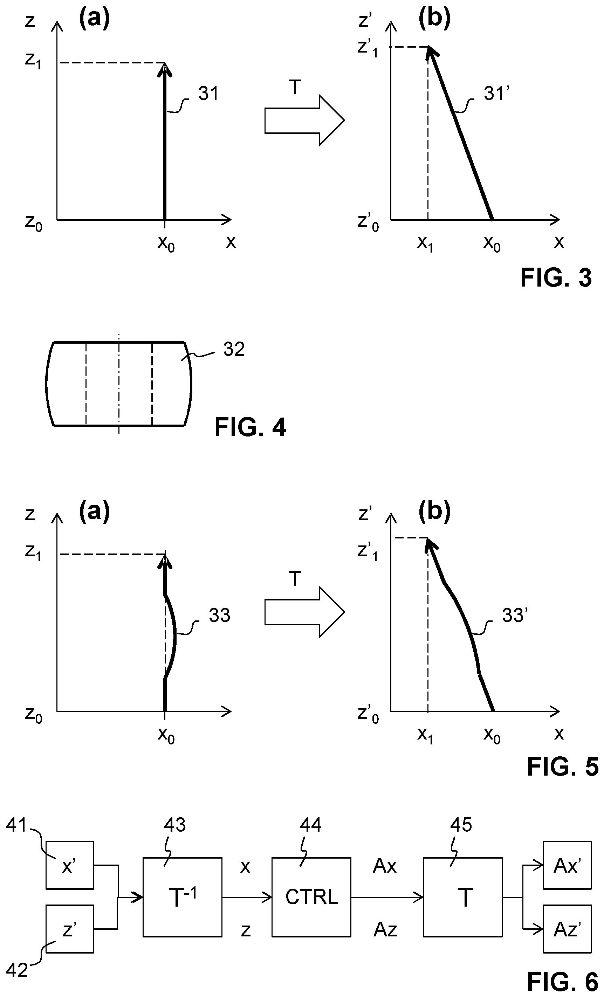

Das wird im Folgenden anhand der Figur 3 erläutert. Es sei angenommen, dass sich das Werkzeug mit konstanter Geschwindigkeit $v_Z$ entlang der Z-Richtung und mit konstantem Achsabstand zum Werkstück von einer Anfangsposition mit Koordinaten $x = x_0$, $z = z_0$ in eine Endposition mit Koordinaten $x = x_0$, $z = z_1$ bewegen soll. Das entsprechende Bewegungsprofil 31 ist im Teil (a) der Fig. 3 illustriert. Ein solches Bewegungsprofil wird dann gewählt, wenn ein zylindrisches Stirnrad bearbeitet werden soll, ohne dass dessen Flanken durch zusätzliche Achsbewegungen modifiziert werden sollen.

Damit in der vorliegenden Maschine ein solches Bewegungsprofil erzeugt werden kann, müssen die Antriebe entlang der Richtungen X und Z' simultan betrieben werden. Dies ist in Teil (b) der Fig. 3 illustriert. Wie aus diesem Diagramm erkennbar ist, bewegt sich der Axialschlitten 7 kontinuierlich entlang der positiven Z'-Richtung, während sich der Werkzeugträger 5 kontinuierlich in Richtung der negativen X-Richtung (d.h. in Fig. 2 nach rechts) bewegt, um die Schrägstellung der Axialführungsrichtung Z' zu kompensieren. Insgesamt wird der Axialschlitten 7 entlang der Z'-Richtung mit konstanter Geschwindigkeit von einem Ort $z_0'$ zu einem Ort $z_1'$ bewegt, während er entlang der X-Richtung mit konstanter Geschwindigkeit vom Ort $x_0$ zu einem Ort $x_1$ bewegt, wird. Dabei gilt für die Anfangs- und Endpositionen:

$$z_1' - z_0' = (z_1 - z_0)/\cos\psi$$

$$x_1 - x_0 = -(z_1 - z_0) \cdot \tan\psi$$

Entsprechend gilt für die Geschwindigkeiten $v_Z'$ entlang der Z'-Richtung und $v_X$ entlang der X-Richtung:

$$v_Z' = v_Z/\cos\psi$$

$$v_X = -v_Z \cdot \tan\psi$$

Das entsprechende Bewegungsprofil 31' entlang der X- und Z'-Richtungen ist in Teil (b) der Fig. 3 illustriert.

Auf dieser Basis ist es ohne Weiteres möglich, Vorschubbefehle entlang der Z-Richtung in transformierte Vorschubbefehle entlang der X- und Z'-Richtungen zu transformieren.

Falls das Werkzeug simultan eine Shiftbewegung entlang der Y-Achse ausführt, bleibt diese Bewegung von der Transformation in das Koordinatensystem X, Y, Z' unberührt. Auch bleiben z.B. eine Schwenkbewegung um die A-Achse, sofern sie während der Bearbeitung ausgeführt würde, oder eine Änderung des Wälzkopplungswinkels zur Erzeugung von Zusatzdrehbewegungen zwischen Werkstück und Werkzeug hiervon unberührt.

Unter der Annahme, dass die Koordinatennullpunkte der Z- und Z'-Richtungen zusammenfallen, können Ortskoordinaten x, y, z im Koordinatensystem X, Y, Z somit wie folgt in Ortskoordinaten x', y', z' im Koordinatensystem X, Y, Z' transformiert werden:

$$x' = x - z \cdot \tan\psi$$

$$y' = y$$

$$z' = z/\cos\psi$$

Die inverse Transformation T⁻¹ ist dann anzuwenden, wenn Messungen mit einem Messsystem, das entlang der X- und Z'-Richtungen angeordnet ist, erfolgen und auf Basis solcher Messungen die X- und Z-Koordinaten des Axialschlittens 7 bestimmt werden sollen. Diese inverse Transformation kann erforderlich sein, um der Maschinensteuerung die gemessenen Koordinaten in der benötigten Form zu übergeben. In diesem Fall sind die Koordinaten x, y, z im Koordinatensystem X, Y, Z wie folgt aus den Koordinaten x', y', z' im Koordinatensystem X, Y, Z' zu berechnen:

$$x = x' + z' \cdot \sin\psi$$

$$y = y'$$

$$z = z' \cdot \cos \psi$$

Erzeugung einer breitenballigen Modifikation

Im Folgenden wird anhand der Figuren 4 und 5 die Erzeugung einer breitenballigen Modifikation an einem zylindrischen Stirnrad erläutert.

Ein breitenballig modifiziertes Stirnrad 32 ist symbolisch in der Fig. 4 dargestellt. Die Zähne des Stirnrads sind entlang der Breitenrichtung (während der Bearbeitung ist das die Z-Richtung) in der Mitte dicker als an den Enden, und entsprechend verlaufen die Flankenlinien der Zahnflanken gekrümmt. Manchmal ist fertigungsbedingt gleichzeitig auch der Kopfkreisdurchmesser in der Mitte des Stirnrads grösser als an den Rändern, so dass das Stirnrad zusätzlich eine tonnenförmige Aussenkontur erhält. In der Fig. 4 ist die tonnenförmige Aussenkontur extrem übertrieben eingezeichnet, um das Prinzip einfacher erläutern zu können. In Realität bewegen sich derartige Modifikationen meist lediglich im Bereich weniger Mikrometer und sind von blossem Auge nicht zu erkennen.

Aus dem Stand der Technik ist es bekannt, ein breitenballig modifiziertes Stirnrad zu erzeugen, indem während der Vorschubbewegung entlang der Z-Richtung eine langsame radiale Zustellbewegung in X-Richtung überlagert wird. Ein solches Bewegungsprofil 33 ist im Teil (a) der Fig. 5 illustriert. Einer gleichförmigen axialen Vorschubbewegung mit konstanter Geschwindigkeit entlang der Z-Richtung wird eine Zustellbewegung entlang der X-Richtung überlagert. Diese hat zunächst eine positive Geschwindigkeit (Koordinate x nimmt zu), die sich immer weiter verringert, bis die Zustellgeschwindigkeit in der Breitenmitte der Verzahnung Null wird und ihr Vorzeichen wechselt (d.h. Koordinate x nimmt wieder ab).

Sehr kleine radiale Zustellgeschwindigkeiten sind wegen der unvermeidbaren Reibungseffekte problematisch. Eine Richtungsumkehr der Zustellbewegung ist zudem problematisch, weil die an der Führung entlang der X-Richtung beteiligten Elemente einen unvermeidbaren Umkehreffekt zeigen.

Bei der vorliegenden Maschine wird eine Richtungsumkehr der Zustellbewegung bei der Erzeugung von Modifikationen vermieden, und die Zustellgeschwindigkeit unterschreitet während der Bearbeitung der Verzahnung nie eine gewisse Mindestgeschwindigkeit, sofern der geforderte Betrag der Balligkeit nicht zu gross ist. Dies ist in Teil (b) der Fig. 5 illustriert, in der das resultierende Bewegungsprofil 33' illustriert ist. Der Werkzeugträger 5 bewegt sich kontinuierlich in die negative X-Richtung, um die Schrägstellung der Z'-Richtung zu kompensieren. Dieser kontinuierlichen Grundbewegung ist die Bewegung zur Erzeugung der Modifikation überlagert. Die Geschwindigkeit der überlagerten Bewegung ist betragsmässig aber immer kleiner als die Geschwindigkeit der Grundbewegung, so dass während der Bearbeitung der Verzahnung nie eine Richtungsumkehr stattfindet und eine gewisse Mindestgeschwindigkeit nie unterschritten wird.

Funktionseinheiten zur Steuerung der axialen Vorschubbewegung und radialen Zustellbewegung

Die Figur 6 illustriert schematisch verschiedene Funktionseinheiten, die im Rahmen der Erzeugung der axialen Vorschubbewegung entlang der Z-Richtung und der radialen Zustellbewegung entlang der X-Richtung eingesetzt werden. Positionssensoren 41, 42 erfassen die Positionen x', z' des Axialschlittens 7 entlang der X- und Z'-Richtungen. Eine erste Transformationseinrichtung 43 transformiert diese Positionen im Koordinatensystem X, Y, Z' in die Positionen x und z im Koordinatensystem X, Y, Z durch Anwendung der inversen Transformation $T^{-1}$ und übergibt diese Ist-Werte an einen Steuerrechner 44 der Maschinensteuerung. Der Steuerrechner 44 erzeugt Steuersignale Ax, Az, die Sollwerten für die Positionen des Axialschlittens 7 im Koordinatensystem X, Y, Z entsprechen. Eine zweite Transformationseinrichtung 45 transformiert diese Steuersignale in transformierte Steuersignale Ax', Az' im Koordinatensystem X, Y, Z' und übergibt diese transformierten Steuersignale an die Achsmodule 3 der Maschinensteuerung.

Anwendung beim Abrichten

Aus dem Stand der Technik ist es bekannt, beim Abrichten durch entsprechende Achsbewegungen Modifikationen auf den Schleifschneckenflanken zu erzeugen, um diese bei der anschliessenden Bearbeitung im Diagonalverfahren auf die Werkstückflanken zu übertragen. Dazu ist es bekannt, eine räumlich feststehende Abrichteinrichtung mit rotierender Abrichtscheibe in Eingriff mit der Schleifschnecke zu bringen und die erforderlichen Bewegungen mit den Maschinenachsen X und Y zu erzeugen.

Mit der vorliegenden Maschine wird eine andere Abrichtstrategie möglich. Für diese Abrichtstrategie wird die Schleifschnecke so weit um die A-Achse gedreht, dass die Shiftachse Y und die Werkzeugachse B senkrecht stehen, also entlang der Z-Richtung verlaufen. Entsprechend wird auch die Abrichteinrichtung ausgerichtet.

In der Fig. 2 ist das durch die gestrichelt eingezeichnete, nur symbolisch dargestellte Abrichteinrichtung 13 angedeutet. Die Abrichteinrichtung ist am Werkstückträger (Drehturm) 15 montiert. Sie kann durch eine Schwenkbewegung des Drehturms um 90° in eine Stellung gebracht werden, in der sie der Schleifschnecke 12 gegenübersteht. Die Abrichteinrichtung 13 umfasst eine Abrichtspindel mit einer darauf montierten, zu einer Drehung angetriebenen Abrichtscheibe 14. Die Abrichtspindel ist auf einem Schwenkkörper 21 angebracht. Dieser ist derart schwenkbar mit dem Werkstückträger verbunden, dass die Abrichtscheibe 14 in Richtung der Schneckengänge und relativ zum Schleifschneckenprofil ausgerichtet werden kann. Die entsprechende Schwenkachse verläuft senkrecht zu den Werkstückachsen C1, C2 und horizontal im Raum. In der Fig. 2 verläuft die entsprechende Schwenkachse senkrecht zur Zeichenebene. Zusätzlich kann die Abrichtspindel um eine weitere Schwenkachse schwenkbar sein, die ebenfalls horizontal im Raum verläuft und senkrecht auf der vorgenannten Schwenkachse steht. In der Fig. 2 verläuft diese zusätzliche Schwenkachse horizontal in der Zeichenebene. Mit dieser zusätzlichen Schwenkachse kann beispielsweise beim Abrichten der Profilwinkel verändert werden.

Die erforderlichen Abrichtbewegungen entlang der Werkzeugachse B werden nun nicht wie üblich mit dem Shiftschlitten entlang der Y-Achse erzeugt, sondern mit dem Axialschlitten 7. Dabei gelten ähnliche Überlegungen wie die vorstehend dargelegten Überlegungen bei der Werkstückbearbeitung. Insbesondere kann auf diese Weise vermieden werden, dass entlang der X-Richtung eine Richtungsumkehr stattfindet, wenn Modifikationen auf der Schleifschneckenflanke erzeugt werden.

Ebenfalls ist die vorliegende Erfindung dann von Vorteil, wenn das Abrichten mit einem auf der Werkstückspindel aufgespannten zahnradförmigen Abrichtrad erfolgt.

### Weitere Anwendungen

Die Vorteile der vorliegenden Erfindung wurden vorstehend anhand des Beispiels der Erzeugung breitenballig modifizierter Stirnräder erläutert. Die Erfindung ist jedoch nicht auf diese Anwendung beschränkt, sondern kann auch bei der Fertigung anderer Verzahnungen bzw. Zahnräder vorteilhaft eingesetzt werden. Insbesondere weist die Erfindung auch Vorteile bei der Erzeugung von auf andere Weise modifizierten Verzahnungen, z.B. von konisch modifizierten Verzahnungen auf, da auch dort mit der Erfindung störende Reibungseffekte vermieden werden können.

### Zweite Ausführungsform

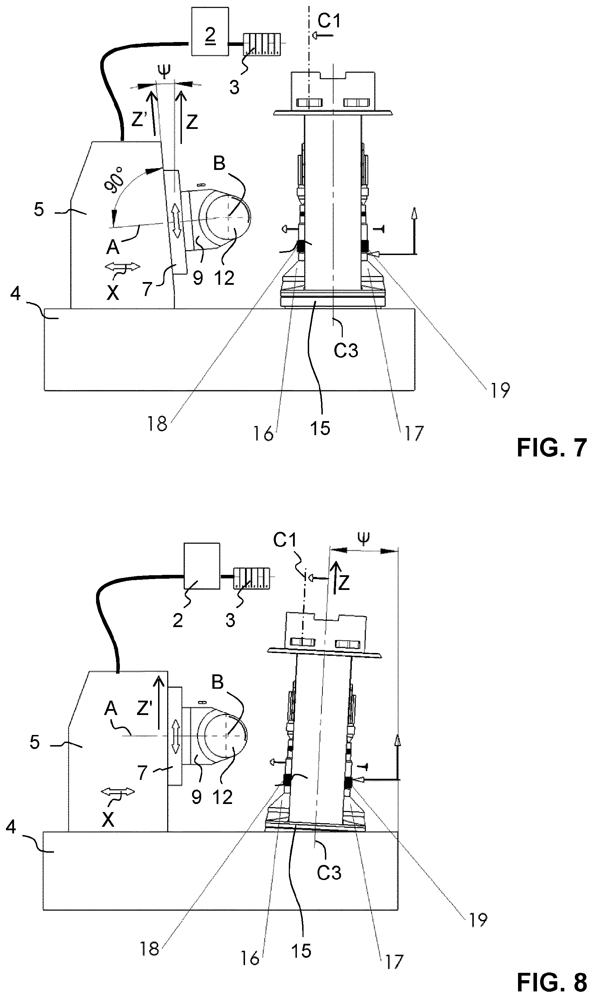

In der Fig. 7 ist schematisch eine Wälzschleifmaschine gemäss einer zweiten Ausführungsform dargestellt. Diese unterscheidet sich von der ersten Ausführungsform dadurch, dass die A-Achse nicht senkrecht zur Z-Richtung und parallel zur X-Richtung verläuft, sondern senkrecht zur Z'-Richtung und dementsprechend im Winkel $\Psi$ zur X-Richtung. Dadurch stehen die Y-Achse und die Werkzeugachse B nicht mehr senkrecht auf der X-Richtung, sobald der Schwenkwinkel um die A-Achse von der in Fig. 7 dargestellten Stellung abweicht. Dennoch lassen sich die vorstehend genannten Vorteile auch mit dieser Anordnung erzielen. Diese Ausführungsform eignet sich insbesondere für kleine Neigungswinkel zwischen 0.1° und 3°.

Insgesamt gilt in dieser Ausführungsform für die Anordnung der Richtungen X, Y, Z, Z', A, B und C1:

- $X \not\angle Y$, $X \perp Z$, $Y \not\parallel Z$
- $A \not\angle X$, $B \parallel Y$, $B \not\parallel C1$, $C1 \parallel Z$
- $A \perp B$, $A \perp Y$, $A \perp Z'$, $A \not\angle C1$, $A \not\angle Z$, $A$ liegt in X-C1-Ebene
- $Z' \not\parallel Z$, $Z' \not\angle X$, $Z'$ liegt in X-C1- Ebene

Wegen der schräg gestellten A-Achse sind gegenüber der ersten Ausführungsform weitere Koordinatentransformationen notwendig, um von einem Koordinatensystem, das durch die Maschinenachsen X, Y, Z', A, B, C1 definiert ist, in ein orthogonales Koordinatensystem oder in ein konventionelles Koordinatensystem der Maschinensteuerung und umgekehrt zu gelangen. Die entsprechenden Transformationen lassen sich jedoch problemlos durch einfache trigonometrische Überlegungen herleiten.

### Dritte Ausführungsform

In der Fig. 8 ist schematisch eine Wälzschleifmaschine gemäss einer dritten Ausführungsform dargestellt. In dieser Ausführungsform ist der gesamte Werkzeugträger 5 mitsamt Axialschlitten 7, Shiftschlitten und Schleifkopf 9 konventionell aufgebaut. Insbesondere verläuft hier die Axialführungsrichtung Z' senkrecht zur Zustellrichtung X. Stattdessen ist hier der Werkstückträger (Drehturm) 15 gegenüber der Vertikalen schräg gestellt. Dadurch verläuft insbesondere die Werkstückachse C1 und somit auch die definitionsgemäss parallel zur Werkstückachse C1 verlaufende axiale Vorschubrichtung Z nicht mehr senkrecht zur X-Richtung.

Auch für diese Ausführungsform sind gegenüber der ersten Ausführungsform weitere Koordinatentransformationen notwendig, um von einem Koordinatensystem, das durch die Maschinenachsen X, Y, Z', A, B, C1 definiert ist, in ein orthogonales Koordinatensystem oder in ein konventionelles Koordinatensystem der Maschinensteuerung und umgekehrt zu gelangen. Die entsprechenden Transformationen lassen sich wiederum problemlos durch einfache trigonometrische Überlegungen herleiten.

### Vierte Ausführungsform

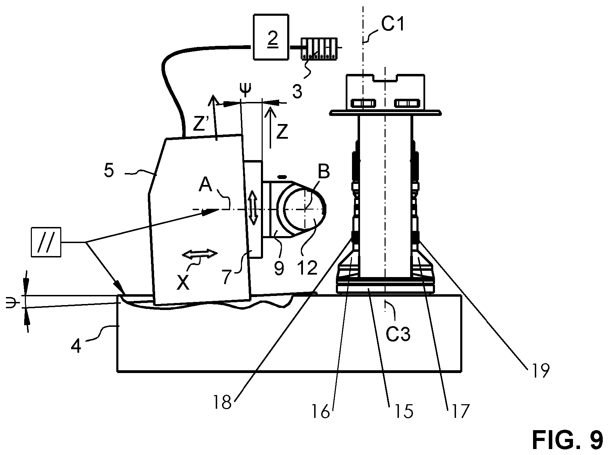

In der Fig. 9 ist schematisch eine Wälzschleifmaschine gemäss einer vierten Ausführungsform dargestellt. Wie in der ersten und zweiten Ausführungsform steht der Drehturm mit den Achsen C1 und C3 vertikal im Raum, und der Axialschlitten 7 ist gegenüber dem Werkzeugträger 5 entlang einer Axialführungsrichtung Z' geführt, die gegenüber der vertikal im Raum verlaufenden Werkstückachse C1 um einen Neigungswinkel $\psi$ zur Vertikalen geneigt verläuft. Anders als in der ersten und zweiten Ausführungsform ist allerdings der gesamte Werkzeugträger 5 mitsamt Axialschlitten 7, Shiftschlitten und Schleifkopf 9 nicht exakt horizontal am Maschinenbett 4 geführt, sondern entlang einer Richtung, die um den Neigungswinkel ψ zur Horizontalen geneigt verläuft. Wie in den vorstehend diskutierten Ausführungsformen wird diese Führungsrichtung wiederum als X-Richtung bezeichnet. Die X-Richtung steht hier somit nicht senkrecht auf der Z-Richtung, sondern senkrecht auf der Z'-Richtung. Wie in der ersten Ausführungsform verläuft die A-Achse aber horizontal im Raum und somit senkrecht zur Z-Richtung. Wegen der schräg gestellten X-Führung verläuft die A-Achse dagegen nicht parallel zur X-Richtung.

Insgesamt gilt in dieser Ausführungsform für die Anordnung der Richtungen X, Y, Z, Z', A, B und C1:

- X ∡ Y, X ∡ Z, Y ∦ Z
- A ∡ X, B ∥ Y, B ∥ C1, C1 ∥ Z
- A ⊥ B, A ⊥ Y, A 1Z, A ⊥ C1, A ∡ Z', A liegt in X-C1-Ebene
- Z' ∦ Z, Z' ⊥ X, Z' liegt in X-C1- Ebene

Auch für diese Ausführungsform sind gegenüber der ersten Ausführungsform weitere Koordinatentransformationen notwendig, um von einem Koordinatensystem, das durch die Maschinenachsen X, Y, Z', A, B, C1 definiert ist, in ein orthogonales Koordinatensystem oder in ein konventionelles Koordinatensystem der Maschinensteuerung und umgekehrt zu gelangen. Die entsprechenden Transformationen lassen sich wiederum problemlos durch einfache trigonometrische Überlegungen herleiten.

Abwandlungen

In den vorstehend dargestellten Beispielen ist der Neigungswinkel ψ positiv, d.h. die Z'-Achse ist zur positiven X-Richtung hin bzw. von der Werkstückachse C1 weg geneigt.

Dieser Winkel kann aber auch negativ sein. Die erwähnten Transformationen behalten auch in dieser Situation ihre Gültigkeit. Ein negativer Neigungswinkel ψ kann insbesondere dann von Vorteil sein, wenn der letzte Schlichthub entlang der negativen Z-Richtung (d.h. in der Figur 2 von oben nach unten) erfolgt, da dann der Werkzeugträger 5 zur Erzeugung der Kompensationsbewegung entlang der negativen X-Richtung bewegt wird, d.h. auf das Werkstück zu. Dies ist von Vorteil, weil auf diese Weise die radialen Bearbeitungskräfte der Kompensationsbewegung entgegenwirken, was zu definierten Kraftverhältnissen in den Komponenten führt, die an der Erzeugung der X-Bewegung beteiligt sind.

Die vorliegende Erfindung ist nicht auf ein konkretes Bearbeitungsverfahren beschränkt. Vorstehend wurden die Vorteile der Erfindung anhand des kontinuierlichen Wälzschleifens erläutert. Die Erfindung zeigt ihre Vorteile aber auch bei anderen Verfahren zur Fertigung von Verzahnungen, darunter Verfahren mit geometrisch unbestimmter Schneide und Verfahren mit geometrisch bestimmter Schneide. Beispielhaft erwähnt seien das Teilungswälzschleifen, das diskontinuierliche oder kontinuierliche Profilschleifen, das Verzahnungshonen, das Wälzfräsen oder das Wälzschälen. Die Erfindung kann zur Fertigung sowohl von aussenverzahnten Werkstücken als auch von innenverzahnten Werkstücken eingesetzt werden. Besonders vorteilhaft wird die Erfindung bei der Feinbearbeitung von vorverzahnten Werkstücken eingesetzt, insbesondere bei der Hartfeinbearbeitung.

Die vorliegende Erfindung ist nicht auf eine konkrete Achsabfolge beschränkt. Je nach Art der Maschine kann es z.B. auch vorteilhaft sein, den Axialschlitten direkt am Maschinenbett anzuordnen und die Werkstückspindel auf einem Radialschlitten anzuordnen, um die radiale Zustellung durch eine Bewegung der Werkstückspindel zu erreichen.

Auch ist die vorliegende Erfindung nicht darauf beschränkt, dass die radiale Zustellrichtung X senkrecht zur Werkstückachse C1 verläuft. So verläuft in der dritten und vierten Ausführungsform die radiale Zustellrichtung X in einem Winkel ungleich 90° zur Werkstückachse C1. Allerdings ist es auch in dieser Situation von Vorteil, wenn die Axialführungsrichtung Z' in einer gemeinsamen Ebene mit der radialen Zustellrichtung X und der Werkstückachse C1 verläuft.

Statt zwei Werkstückspindeln können auch drei oder mehr Werkstückspindeln oder nur eine einzige Werkstückspindel vorhanden sein. Die mindestens eine Werkstückspindel braucht nicht auf einem beweglichen Werkstückträger angeordnet zu sein, sondern kann direkt am Maschinenbett angeordnet sein. In anderen Ausführungsformen ist die mindestens eine Werkstückspindel an einem beweglichen Werkstückträger angeordnet, der die radiale Zustellbewegung entlang der X-Richtung realisiert. Auch die A-Achse kann werkstückseitig statt werkzeugseitig realisiert sein.

Die Abrichtvorrichtung 13 kann statt an einem beweglichen Werkstückträger auch am Maschinenbett angebracht sein. Der Werkzeugträger 5 kann in diesem Fall gegenüber dem Maschinenbett schwenkbar sein, um das Bearbeitungswerkzeug zum Abrichtwerkzeug zu bewegen, wie das an sich z.B. aus US5857894B bekannt ist.

Aus dem Vorstehenden wird erkennbar, dass eine sehr grosse Zahl an relativen Anordnungen der beteiligten Achsen möglich ist. Die Erfindung ist nicht auf eine konkrete Anordnung beschränkt.

Die vorliegende Erfindung ist zudem nicht auf bestimmte Antriebsarten für die verschiedenen Linearführungen beschränkt. Der Antrieb kann auf jede beliebige im Stand der Technik bekannte Weise erfolgen, z.B. durch Kugelgewindetriebe oder Linearmotoren.

**Patentansprüche**

1. Werkzeugmaschine (1) zur Bearbeitung von Verzahnungen, aufweisend:

eine Werkstückspindel (16), um ein Werkstück (18) zu einer Drehung um eine Werkstückachse (C1) anzutreiben;

eine Werkzeugspindel (11), um ein Werkzeug (12) zu einer Drehung um eine Werkzeugachse (B) anzutreiben und

einen Axialschlitten (7), mit dem eine relative axiale Vorschubposition zwischen der Werkzeugspindel (11) und der Werkstückspindel (16) bezüglich der Werkstückachse (C1) veränderlich ist, wobei der Axialschlitten (7) entlang einer Axialführungsrichtung (Z') geführt ist, die gegenüber der Werkstückachse (C1) um einen Neigungswinkel (Ψ) geneigt ist, wobei der Neigungswinkel (Ψ) betragsmässig einen Wert zwischen 0.1° und 30°, insbesondere zwischen 0.5° und 30° annimmt; und

einen Zustellschlitten (5), mit dem ein radialer Achsabstand zwischen der Werkzeugachse (B) und der Werkstückachse (C1) entlang einer radialen Zustellrichtung (X) veränderlich ist, wobei die Axialführungsrichtung (Z') vorzugsweise in einer gemeinsamen Ebene mit der Werkstückachse (C1) und der radialen Zustellrichtung (X) verläuft, und wobei die radiale Zustellrichtung (X) vorzugsweise in einem Winkel von 60° bis 120° zur Werkstückachse (C1) verläuft, insbesondere senkrecht zur Werkstückachse (C1), **dadurch gekennzeichnet, dass** die Werkzeugmaschine eine Steuereinrichtung (2, 3) aufweist, die dazu ausgebildet ist, das folgende Verfahren auszuführen:

Ausführen von simultanen Bewegungen zwischen der Werkzeugspindel (11) und der Werkstückspindel (16) entlang der geneigten Axialführungsrichtung (Z') und der radialen Zustellrichtung (X), während sich ein auf der Werkzeugspindel (11) aufgespanntes Werkzeug (12) in einem Bearbeitungseingriff mit dem auf der Werkstückspindel aufgespannten Werkstück (18) befindet,

wobei die Bewegung entlang der geneigten Axialführungsrichtung (Z') mit einer Axialführungsgeschwindigkeit erfolgt und die Bewegung entlang der radialen Zustellrichtung (X) mit einer radialen Zustellgeschwindigkeit erfolgt,

wobei die radiale Zustellgeschwindigkeit während eines Bearbeitungshubs betragsmässig einen vorbestimmten Schwellwert nicht unterschreitet.

2. Werkzeugmaschine (1) nach Anspruch 1 aufweisend:

ein Maschinenbett (4);

wobei der Zustellschlitten (5) entlang der radialen Zustellrichtung (X) verschiebbar auf dem Maschinenbett (4) geführt ist und einen Werkzeugträger bildet;

wobei der Axialschlitten (7) auf dem Zustellschlitten (5) entlang der Axialführungsrichtung (Z') geführt ist.

3. Werkzeugmaschine (1) nach Anspruch 1 oder 2,

wobei die Werkzeugspindel (11) um eine Schwenkachse (A) gegenüber dem Axialschlitten (7) verschwenkbar ist, und

wobei die Schwenkachse (A) in einer gemeinsamen Ebene mit der Werkstückachse (C1) und der radialen Zustellrichtung (X) verläuft, mit einem Winkel zur radialen Zustellrichtung (X), der betragsmässig einen Wert zwischen 0° und 30° annimmt, insbesondere parallel zur radialen Zustellrichtung (X),

wobei die Werkzeugspindel (11) vorzugsweise entlang einer Shiftrichtung (Y), die parallel zur Werkzeugachse (B) verläuft, gegenüber dem Axialschlitten (7) verschiebbar ist, wobei die Shiftrichtung (Y) senkrecht zur Schwenkachse (A) verläuft.

4. Werkzeugmaschine (1) nach einem der vorhergehenden Ansprüche, wobei die Steuereinrichtung (2, 3) dazu ausgebildet ist, die radiale Zustellgeschwindigkeit und die Axialführungsgeschwindigkeit derart zu steuern, dass die radiale Zustellgeschwindigkeit und die Axialführungsgeschwindigkeit in einem Verhältnis zueinander stehen, das sich während des Bearbeitungshubs ändert.

5. Werkzeugmaschine (1) nach einem der vorhergehenden Ansprüche, wobei die Steuereinrichtung (2, 3) dazu ausgebildet ist, die radiale Zustellgeschwindigkeit und die Axialführungsgeschwindigkeit derart zu steuern, dass die radiale Zustellgeschwindigkeit während des Bearbeitungshubs ihr Vorzeichen nicht ändert, während eine resultierende Bewegung zwischen der Werkzeugspindel (11) und der Werkstückspindel (16) entlang der radialen Zustellrichtung (X) eine Geschwindigkeit ($v_X$) aufweist, die während des Bearbeitungshubs ihr Vorzeichen ändert.

6. Werkzeugmaschine (1) nach einem der vorhergehenden Ansprüche, wobei die Steuereinrichtung (2, 3) mindestens eine der folgenden Transformationseinrichtungen umfasst:

eine erste Transformationseinrichtung (43), um Positionsgrössen (x', z'), die entlang der radialen Zustellrichtung (X) und der geneigten Axialführungsrichtung (Z') gemessen wurden, in transformierte Positionsgrössen (x, z) entlang der radialen Zustellrichtung (X) und einer parallel zur Werkstückachse (C1) verlaufenden axialen Vorschubrichtung (Z) zu transformieren; und eine zweite Transformationseinrichtung (45), um Steuerbefehle für eine Bewegung der Werkzeugspindel (11) relativ zur Werkstückspindel (16) entlang einer parallel zur Werkstückachse (C1) verlaufenden axialen Vorschubrichtung (Z) in transformierte Steuerbefehle (Ax', Az') für eine simultane Bewegung der Werkzeugspindel (11) entlang der geneigten Axialführungsrichtung (Z') und der radialen Zustellrichtung (X) zu transformieren.

7. Werkzeugmaschine (1) nach einem der vorhergehenden Ansprüche, aufweisend eine Abrichteinrichtung (13) mit einem Abrichtwerkzeug (14),

wobei die Steuereinrichtung (2, 3) dazu ausgebildet ist, das Werkzeug (12) mit dem Abrichtwerkzeug (14) unter Erzeugung von Bewegungen entlang der geneigten Axialführungsrichtung (Z') abzurichten,
wobei die Steuereinrichtung (2, 3) vorzugsweise dazu ausgebildet ist, die Werkzeugspindel (11) in eine Abrichtstellung zu bringen, in der die Werkzeugachse (B) in oder parallel zu einer Ebene verläuft, die von der Axialführungsrichtung (Z') und der radialen Zustellrichtung (X) aufgespannt wird.

8. Werkzeugmaschine (1) nach Anspruch 7,

wobei die Abrichteinrichtung (13) eine Abrichtspindel aufweist, die dazu ausgebildet ist, das Abrichtwerkzeug (14) zu einer Drehung um eine Abrichtspindelachse anzutreiben, und
wobei die Abrichtspindel um mindestens eine Abrichtschwenkachse schwenkbar ist, um das Abrichtwerkzeug (14) in Eingriff mit dem Werkzeug (12) zu bringen, wenn sich die Werkzeugspindel (11) in der Abrichtstellung befindet,
wobei die Abrichtschwenkachse vorzugsweise quer zur Axialvorschubrichtung (Z'), insbesondere in einem Winkel von 60° bis 120° zur Axialvorschubrichtung verläuft.

9. Werkzeugmaschine (1) nach einem der vorhergehenden Ansprüche, wobei die Werkzeugmaschine für eines der folgenden Verfahren ausgebildet ist: kontinuierliches Wälzschleifen, Teilwälzschleifen, diskontinuierliches oder kontinuierliches Profilschleifen, Verzahnungshonen, Wälzfräsen oder Wälzschälen.

10. Verfahren zur Bearbeitung von Zahnflanken eines Werkstücks (18) mit einer Werkzeugmaschine (1) nach einem der vorhergehenden Ansprüche, aufweisend:

Ausführen von simultanen Bewegungen zwischen der Werkzeugspindel (11) und der Werkstückspindel (16) entlang der geneigten Axialführungsrichtung (Z') und der radialen Zustellrichtung (X), während sich ein auf der Werkzeugspindel (11) aufgespanntes Werkzeug (12) in einem Bearbeitungseingriff mit dem auf der Werkstückspindel aufgespannten Werkstück (18) befindet,
wobei die Bewegung entlang der geneigten Axialführungsrichtung (Z') mit einer Axialführungsgeschwindigkeit erfolgt und die Bewegung entlang der radialen Zustellrichtung (X) mit einer radialen Zustellgeschwindigkeit erfolgt,
wobei die radiale Zustellgeschwindigkeit während eines Bearbeitungshubs betragsmässig einen vorbestimmten Schwellwert nicht unterschreitet.

11. Verfahren nach Anspruch 10,

wobei die radiale Zustellgeschwindigkeit und die Axialführungsgeschwindigkeit in einem Verhältnis zueinander stehen, das sich während des Bearbeitungshubs ändert,
wobei die radiale Zustellgeschwindigkeit und die Axialführungsgeschwindigkeit vorzugsweise derart in einem zeitlich veränderlichen Verhältnis stehen, dass die radiale Zustellgeschwindigkeit während des Bearbeitungshubs ihr Vorzeichen nicht ändert, während eine resultierende Bewegung zwischen der Werkzeugspindel (11) und der Werkstückspindel (16) entlang der radialen Zustellrichtung (X) eine Geschwindigkeit ($v_X$) aufweist, die während des Bearbeitungshubs ihr Vorzeichen ändert.

12. Verfahren zum Abrichten eines Werkzeugs (12) zur Bearbeitung von Verzahnungen mit einer Maschine nach einem der Ansprüche 1 bis 9, aufweisend:

Erzeugen von Relativbewegungen zwischen dem Werkzeug (12) und einer Abrichteinrichtung (13) mit einem Abrichtwerkzeug (14) entlang der geneigten Axialführungsrichtung (Z'), während das Werkzeug (12) mit dem Abrichtwerkzeug (14) in Eingriff steht, um das Werkzeug (12) abzurichten,
wobei die Werkzeugspindel (11) vorzugsweise vor dem Abrichten in eine Abrichtstellung gebracht wird, in der die Werkzeugachse (B) in oder parallel zu einer Ebene verläuft, die von der Axialführungsrichtung (Z') und der radialen Zustellrichtung (X) aufgespannt wird.

**13.** Verfahren nach einem der Ansprüche 10 bis 12, wobei das Verfahren aufweist:

Messen von Positionsgrössen (x', z') entlang der radialen Zustellrichtung (X) und der geneigten Axialführungsrichtung (Z'); und Transformieren der gemessenen Positionsgrössen (x', z') in transformierte Positionsgrössen (x, z) entlang der radialen Zustellrichtung (X) und einer parallel zur Werkstückachse (C1) verlaufenden axialen Vorschubrichtung (Z), und/oder wobei das Verfahren aufweist:

Erzeugen von Steuerbefehlen (Ax, Az) für eine Bewegung der Werkzeugspindel (11) relativ zur Werkstückspindel (16) entlang einer parallel zur Werkstückachse (C1) verlaufenden axialen Vorschubrichtung (Z); und Transformieren der erzeugten Steuerbefehle in transformierte Steuerbefehle (Ax', Az') für eine simultane Bewegung der Werkzeugspindel (11) entlang der geneigten Axialführungsrichtung (Z') und der radialen Zustellrichtung (X).

**14.** Verfahren nach Anspruch 10 oder 11, wobei das Verfahren eines der folgenden Verfahren ist: kontinuierliches Wälzschleifen, Teilwälzschleifen, diskontinuierliches oder kontinuierliches Profilschleifen, Verzahnungshonen, Wälzfräsen oder Wälzschälen.

**15.** Computerprogramm, umfassend Befehle, welche bewirken, dass eine Steuereinrichtung (2, 3) einer Werkzeugmaschine (1) nach einem der Ansprüche 1 bis 9 ein Verfahren nach einem der Ansprüche 10 bis 14 ausführt.

**Claims**

**1.** A machine tool (1) for machining gearing, comprising:

a workpiece spindle (16) for driving a workpiece (18) for rotation about a workpiece axis (C1); a tool spindle (11) for driving a tool (12) for rotation about a tool axis (B), and an axial slide (7) configured to vary a relative axial feed position between the tool spindle (11) and the workpiece spindle (16) with respect to the workpiece axis (C1), wherein the axial slide (7) is guided along an axial guide direction (Z') which is inclined with respect to the workpiece axis (C1) by an angle of inclination (Ψ), the angle of inclination (Ψ) having an absolute a value of between 0.1° and 30°, in particular between 0.5° and 30°; and an infeed slide (5), configured to vary a radial distance between the tool axis (B) and the workpiece axis (C1) along a radial infeed direction (X), wherein the axial guide direction (Z') preferably runs in a common plane with the workpiece axis (C1) and the radial infeed direction (X), and wherein the radial infeed direction (X) preferably runs at an angle of 60° to 120° to the workpiece axis (C1), in particular perpendicular to the workpiece axis (C1), **characterized in that** the machine tool comprises a control device (2, 3) which is configured to carry out the following method:

causing simultaneous movements between the tool spindle (11) and the workpiece spindle (16) along the inclined axial guide direction (Z') and the radial infeed direction (X) while a tool (12) clamped on the tool spindle (11) is in machining engagement with the workpiece (18) clamped on the workpiece spindle, wherein the movement along the inclined axial guide direction (Z') is carried out at an axial guide speed and the movement along the radial infeed direction (X) takes place at a radial infeed speed, wherein the absolute value of the radial infeed speed during a machining stroke does not fall below a predetermined threshold value.

**2.** The machine tool (1) according to claim 1:

a machine bed (4); wherein the infeed slide (5) is guided on the machine bed (4) so as to be displaceable along the radial infeed direction (X), forming a tool carrier; wherein the axial slide (7) is guided on the infeed slide (5) along the axial guide direction (Z').

**3.** The machine tool (1) according to claim 1 or 2,

wherein the tool spindle (11) is pivotable about a swivel axis (A) relative to the axial slide (7), and wherein the swivel axis (A) extends in a common plane with the workpiece axis (C1) and the radial infeed direction (X), with an angle to the radial infeed direction (X) that has an absolute value between 0° and 30° in terms of magnitude, in particular parallel to the radial infeed direction (X), wherein the tool spindle (11) is preferably displaceable relative to the axial slide (7) along a shift direction (Y) running parallel to the tool axis (B), wherein the shift direction (Y) runs perpendicular to the swivel axis (A).

4. The machine tool (1) according to any one of the preceding claims, wherein the control device (2, 3) is configured to control the radial infeed speed and the axial guide speed in such a way that the radial infeed speed and the axial guide speed have a ratio that changes during the machining stroke.

5. The machine tool (1) according to any one of the preceding claims, wherein the control device (2, 3) is configured to control the radial infeed speed and the axial guide speed in such a way that the radial infeed speed does not change its sign during the machining stroke, while a resulting movement between the tool spindle (11) and the workpiece spindle (16) along the radial infeed direction (X) comprises a speed ($v_X$) which changes its sign during the machining stroke.

6. The machine tool (1) according to any one of the preceding claims, wherein the control device (2, 3) comprises at least one of the following transformation devices:

   a first transformation device (43) for transforming position variables (x', z') measured along the radial infeed direction (X) and the inclined axial feed direction (Z') into transformed position variables (x, z) along the radial infeed direction (X) and an axial feed direction (Z) parallel to the workpiece axis (C1); and
   a second transformation device (45) for transforming control commands for a movement of the tool spindle (11) relative to the workpiece spindle (16) along an axial feed direction (Z) running parallel to the workpiece axis (C1) into transformed control commands (Ax', Az') for a simultaneous movement of the tool spindle (11) along the inclined axial feed direction (Z') and the radial infeed direction (X).

7. The machine tool (1) according to any one of the preceding claims, comprising a dressing device (13) with a dressing tool (14)

   wherein the control device (2, 3) is configured to dress the tool (12) with the dressing tool (14) while generating movements along the inclined axial guide direction (Z'),
   wherein the control device (2, 3) is preferably configured to bring the tool spindle (11) into a dressing orientation in which the tool axis (B) extends in or parallel to a plane spanned by the axial guide direction (Z') and the radial infeed direction (X).

8. The machine tool (1) according to claim 7,

wherein the dressing device (13) comprises a dressing spindle which is configured to drive the dressing tool (14) for rotation about a dressing spindle axis, and
wherein the dressing spindle is pivotable about at least one dressing swivel axis in order to bring the dressing tool (14) into engagement with the tool (12) when the tool spindle (11) is in the dressing orientation,
wherein the dressing swivel axis preferably extends transversely to the axial feed direction (Z'), in particular at an angle of 60° to 120° to the axial feed direction.

9. The machine tool (1) according to any one of the preceding claims, wherein the machine tool is configured to carry out one of the following processes: continuous generation grinding, discontinuous generation grinding, discontinuous or continuous profile grinding, gear honing, hobbing or hob peeling.

10. A method for machining tooth flanks of a workpiece (18) with a machine tool (1) according to any one of the preceding claims, comprising:

    carrying out simultaneous movements between the tool spindle (11) and the workpiece spindle (16) along the inclined axial guide direction (Z') and the radial infeed direction (X) while a tool (12) clamped on the tool spindle (11) is in machining engagement with the workpiece (18) clamped on the workpiece spindle,
    wherein the movement along the inclined axial guide direction (Z') takes place at an axial guide speed and the movement along the radial infeed direction (X) takes place at a radial infeed speed,
    wherein the absolute value of the radial infeed speed during a machining stroke does not fall below a predetermined threshold value.

11. The method according to claim 10,

    wherein the radial infeed speed and the axial guide speed have a ratio which changes during the machining stroke,
    wherein the radial infeed speed and the axial guidance speed preferably have a time-variable ratio such that the radial infeed speed does not change its sign during the machining stroke, while a resulting movement between the tool spindle (11) and the workpiece spindle (16) along the radial infeed direction (X) has a speed ($v_X$) which changes its sign during the machining stroke.

12. A method for dressing a tool (12) for machining gearing with a machine according to any one of claims 1 to 9, comprising:

generating relative movements between the tool (12) and a dressing device (13) with a dressing tool (14) along the inclined axial guide direction (Z') while the tool (12) is engaged with the dressing tool (14) in order to dress the tool (12), wherein the tool spindle (11) is preferably brought into a dressing orientation before dressing, in which the tool axis (B) extends in or parallel to a plane spanned by the axial guide direction (Z') and the radial infeed direction (X).

13. The method according to any one of claims 10 to 12, wherein the method comprises:

measuring position variables (x', z') along the radial infeed direction (X) and the inclined axial guide direction (Z'); and
transforming the measured position variables (x', z') into transformed position variables (x, z) along the radial infeed direction (X) and an axial feed direction (Z) parallel to the workpiece axis (C1),
and/or wherein the method comprises:

generating control commands (Ax, Az) for a movement of the tool spindle (11) relative to the workpiece spindle (16) along an axial feed direction (Z) parallel to the workpiece axis (C1); and
transforming the generated control commands into transformed control commands (Ax', Az') for simultaneous movement of the tool spindle (11) along the inclined axial guide direction (Z') and the radial infeed direction (X).

14. The method according to claim 10 or 11, said method being one of the following methods: continuous generation grinding, discontinuous generation grinding, discontinuous or continuous profile grinding, gear honing, hobbing or hob peeling.

15. A computer program comprising instructions which cause a control device (2, 3) of a machine tool (1) according to any one of claims 1 to 9 to execute a method according to any one of claims 10 to 14.

**Revendications**

1. Machine-outil (1) pour l'usinage d'engrenages, présentant :

une broche porte-pièce (16) pour entraîner une pièce à usiner (18) en rotation autour d'un axe de pièce à usiner (C1) ;
une broche d'outil (11) pour entraîner un outil (12) en rotation autour d'un axe d'outil (B), et

un chariot axial (7) avec lequel une position d'avance axiale relative entre la broche porte-outil (11) et la broche porte-pièce (16) peut être varier par rapport à l'axe (C1) de la pièce à usiner, le chariot axial (7) étant guidé le long d'une direction de guidage axial (Z') qui est inclinée d'un angle d'inclinaison (Ψ) par rapport à l'axe (C1) de la pièce à usiner, l'angle d'inclinaison (Ψ) ayant en valeur absolue une valeur comprise entre 0.1° et 30° , en particulier entre 0,5° et 30° ; et
un chariot d'avance (5) avec lequel une distance axiale radiale entre l'axe d'outil (B) et l'axe de pièce (C1) est variable le long d'une direction d'avance radiale (X), la direction de guidage axiale (Z') s'étendant de préférence dans un plan commun avec l'axe de pièce (C1) et la direction d'avance radiale (X), et la direction d'avance radiale (X) s'étendant de préférence selon un angle de 60° à 120° par rapport à l'axe de pièce (C1), en particulier perpendiculairement à l'axe de pièce (C1),
**caractérisé en ce que** la machine-outil comprend un dispositif de commande (2, 3) qui est conçu pour exécuter le procédé suivant :

exécuter des mouvements simultanés entre la broche porte-outil (11) et la broche porte-pièce (16) le long de la direction de guidage axial incliné (Z') et de la direction d'avance radiale (X), tandis qu'un outil (12) serré sur la broche porte-outil (11) se trouve en prise d'usinage avec la pièce à usiner (18) serrée sur la broche porte-pièce,
le mouvement le long de la direction de guidage axial incliné (Z') étant effectué à une vitesse de guidage axial et le mouvement le long de la direction d'avance radiale (X) étant effectué à une vitesse d'avance radiale,
la vitesse d'avance radiale ne descendant pas pendant une course d'usinage en dessous d'une valeur seuil prédéterminée.

2. Machine-outil (1) selon la revendication 1 :

un banc de machine (4) ;
le chariot d'avance (5) étant guidé de manière déplaçable sur le banc de machine (4) le long de la direction d'avance radiale (X) et formant un porte-outil ;
le chariot axial (7) étant guidé sur le chariot d'avance (5) le long de la direction de guidage axial (Z').

3. Machine-outil (1) selon la revendication 1 ou 2,

la broche d'outil (11) pouvant pivoter autour d'un axe de pivotement (A) par rapport au chariot axial (7), et

l'axe de pivotement (A) s'étendant dans un plan commun avec l'axe de la pièce à usiner (C1) et la direction d'avance radiale (X), avec un angle par rapport à la direction d'avance radiale (X) ayant en valeur absolue une valeur comprise entre 0° et 30°, en particulier parallèlement à la direction d'avance radiale (X),

la broche d'outil (11) étant de préférence déplaçable par rapport au chariot axial (7) le long d'une direction de décalage (Y) qui s'étend parallèlement à l'axe d'outil (B), la direction de décalage (Y) s'étendant perpendiculairement à l'axe de pivotement (A).

4. Machine-outil (1) selon l'une quelconque des revendications précédentes, dans laquelle le dispositif de commande (2, 3) est conçu pour commander la vitesse d'avance radiale et la vitesse de guidage axial de manière à ce que la vitesse d'avance radiale et la vitesse de guidage axial soient dans un rapport qui varie pendant la course d'usinage.

5. Machine-outil (1) selon l'une quelconque des revendications précédentes, dans laquelle le dispositif de commande (2, 3) est conçu pour commander la vitesse d'avance radiale et la vitesse de guidage axial de telle sorte que la vitesse d'avance radiale ne change pas de signe pendant la course d'usinage, tandis qu'un mouvement résultant entre la broche porte-outil (11) et la broche porte-pièce (16) le long de la direction d'avance radiale (X) présente une vitesse ($v_X$) qui change de signe pendant la course d'usinage.

6. Machine-outil (1) selon l'une quelconque des revendications précédentes, dans laquelle le dispositif de commande (2, 3) comprend au moins l'un des dispositifs de transformation suivants :

un premier dispositif de transformation (43) pour transformer des grandeurs de position (x', z') mesurées le long de la direction d'avance radiale (X) et de la direction de guidage axial inclinée (Z') en grandeurs de position transformées (x, z) le long de la direction d'avance radiale (X) et d'une direction d'avance axiale (Z) s'étendant parallèlement à l'axe de la pièce à usiner (C1) ; et

un deuxième dispositif de transformation (45) pour transformer des instructions de commande pour un mouvement de la broche porte-outil (11) par rapport à la broche porte-pièce (16) le long d'une direction d'avance axiale (Z) s'étendant parallèlement à l'axe (C1) de la pièce à usiner en instructions de commande transformées (Ax', Az') pour un mouvement simultané de la broche porte-outil (11) le long de la direction de guidage axiale inclinée (Z') et de la direction d'avance radiale (X).

7. Machine-outil (1) selon l'une quelconque des revendications précédentes, comprenant un dispositif de dressage (13) avec un outil de dressage (14)

le dispositif de commande (2, 3) étant conçu pour dresser l'outil (12) avec l'outil de dressage (14) en générant des mouvements le long de la direction de guidage axial incliné (Z'), le dispositif de commande (2, 3) étant de préférence conçu pour amener la broche d'outil (11) dans une position de dressage dans laquelle l'axe d'outil (B) s'étend dans ou parallèlement à un plan qui est tendu par la direction de guidage axial (Z') et la direction d'avance radiale (X).

8. Machine-outil (1) selon la revendication 7,

dans lequel le dispositif de dressage (13) comprend une broche de dressage qui est adaptée pour entraîner l'outil de dressage (14) en rotation autour d'un axe de broche de dressage, et

dans lequel la broche de dressage peut pivoter autour d'au moins un axe de pivotement de dressage afin d'amener l'outil de dressage (14) en prise avec l'outil (12) lorsque la broche d'outil (11) est dans la position de dressage, l'axe de pivotement de dressage s'étendant de préférence transversalement à la direction d'avance axiale (Z'), en particulier selon un angle de 60° à 120° par rapport à la direction d'avance axiale.

9. Machine-outil (1) selon l'une quelconque des revendications précédentes, dans laquelle la machine-outil est conçue pour l'un des procédés suivants : rectification par génération en continu, rectification par génération partielle, rectification de profil discontinue ou continue, honage d'engrenages, fraisage par génération ou écroûtage par génération.

10. Procédé d'usinage de flancs de dents d'une pièce (18) avec une machine-outil (1) selon l'une quelconque des revendications précédentes, comprenant :

exécuter des mouvements simultanés entre la broche porte-outil (11) et la broche porte-pièce (16) le long de la direction de guidage axial inclinée (Z') et de la direction d'avance radiale (X), tandis qu'un outil (12) serré sur la broche porte-outil (11) se trouve en prise d'usinage avec la pièce à usiner (18) serrée sur la broche porte-pièce,

le mouvement le long de la direction de guidage axial incliné (Z') étant effectué à une vitesse de guidage axial et le mouvement le long de la direction d'avance radiale (X) étant effectué à une vitesse d'avance radiale, la vitesse d'avance radiale ne descendant pas pendant une course d'usinage en dessous d'une valeur seuil prédéterminée.

11. Procédé selon la revendication 10,

dans lequel la vitesse d'avance radiale et la vitesse de guidage axial sont dans un rapport qui varie pendant la course d'usinage, la vitesse d'avance radiale et la vitesse de guidage axial étant de préférence dans un rapport variable dans le temps de telle sorte que la vitesse d'avance radiale ne change pas de signe pendant la course d'usinage, tandis qu'un mouvement résultant entre la broche porte-outil (11) et la broche porte-pièce (16) le long de la direction d'avance radiale (X) présente une vitesse ($v_X$) qui change de signe pendant la course d'usinage.

12. Procédé de dressage d'un outil (12) d'usinage d'engrenages avec une machine selon l'une des revendications 1 à 9, comprenant :

générer des mouvements relatifs entre l'outil (12) et un dispositif de dressage (13) avec un outil de dressage (14) le long de la direction de guidage axial incliné (Z'), tandis que l'outil (12) est en prise avec l'outil de dressage (14), pour dresser l'outil (12), la broche d'outil (11) étant de préférence amenée avant le dressage dans une position de dressage dans laquelle l'axe d'outil (B) s'étend dans ou parallèlement à un plan qui est tendu par la direction de guidage axial (Z') et la direction d'avance radiale (X).

13. Procédé selon l'une quelconque des revendications 10 à 12, ledit procédé comprenant :

mesurer des grandeurs de position (x', z') le long de la direction d'avance radiale (X) et de la direction de guidage axial incliné (Z') ; et transformer les grandeurs de position mesurées (x', z') en grandeurs de position transformées (x, z) le long de la direction d'avance radiale (X) et d'une direction d'avance axiale (Z) s'étendant parallèlement à l'axe de la pièce à usiner (C1), et/ou dans lequel le procédé comprend générer des instructions de commande (Ax, Az) pour un mouvement de la broche porte-outil (11) par rapport à la broche porte-pièce (16) le long d'une direction d'avance axiale (Z) s'étendant parallèlement à l'axe (C1) de la pièce à usiner ; et transformer les instructions de commande générées en instructions de commande transformées (Ax', Az') pour un mouvement simultané de la broche porte-outil (11) le long de la direction de guidage axial incliné (Z') et de la direction d'avance radiale (X).

14. Procédé selon la revendication 10 ou 11, dans lequel le procédé est l'un des procédés suivants : rectification par génération en continu, rectification par génération partielle, rectification de profil discontinue ou continue, honage d'engrenages, fraisage par génération ou écroûtage par génération.

15. Programme d'ordinateur comprenant des instructions qui font qu'un dispositif de commande (2, 3) d'une machine-outil (1) selon l'une des revendications 1 à 9 exécute un procédé selon l'une des revendications 10 à 14.

**FIG. 1**

**FIG. 2**

**FIG. 3**

**FIG. 4**

**FIG. 5**

**FIG. 6**

FIG. 7

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012016515 A1
- US 2016176010 A1
- US 5857894 B